Europäisches Patentamt

European Patent Office

Office européen des brevets

(11) Publication number: **0 124 060**
A1

# EUROPEAN PATENT APPLICATION

(21) Application number: 84104569.3

(22) Date of filing: 24.04.84

(51) Int. Cl.³: **A 01 J 25/16**, B 65 G 47/24

(30) Priority: 02.05.83 IT 2088283

(43) Date of publication of application: 07.11.84
Bulletin 84/45

(84) Designated Contracting States: CH DE FR LI NL SE

(71) Applicant: SORDI S.p.A., Viale Trento Trieste, 37,
I-20075 Lodi (Province of Milano) (IT)

(72) Inventor: Sordi, Mario, Viale Trento Trieste 35,
I-20075 Lodi Milano (IT)

(74) Representative: Modiano, Guido et al, MODIANO, JOSIF,
PISANTY & STAUB Modiano & Associati Via
Meravigli, 16, I-20123 Milan (IT)

(54) Apparatus for tipping over moulds for cheese and the like.

(57)    The apparatus comprises a structural frame (1) pivotally
carrying a tipper (2) which has a pair of conveyors (11, 12) for
mould-holding trays (15) adapted to be aligned to an input
conveyor (13) and output conveyor (14) and provided with
holding jaws (50) and a driving frame-piston assembly (40, 41,
42, 43) for moving the mould-holding trays (15) along a substantially perpendicular direction to the pivotal axis of the tip-
per (2), there being further provided motor means (70, 71, 72)
for driving the tipper (2) rotatably and motor means (20) for
driving the conveyors (11, 12).

## APPARATUS FOR TIPPING OVER MOULDS FOR CHEESE AND
## THE LIKE

This invention relates to an apparatus for tipping over moulds for cheese and the like.

As is known, in the production of many cheese varieties, it is required that a mould containing the cheese product be tipped over at preset time intervals in accordance with procedures which are directly dependent on the processing standards of individual cheese varieties.

It is current practice to arrange for the moulds to be tipped over manually by an operator who, with application of some dexterity, would quickly overturn the mould such that the cheese product, which was previously resting on the mould bottom, is now transferred without alteration of its shape onto a plate or closure surface positioned at the mouth of the presently upside down mould.

The manual effectuation of this operation involves in the first place application of a certain skill by the operator, and secondly, is labour consuming in that the moulds must be overturned one by one.

Thus the task of this invention is to obviate such prior problems by providing an apparatus which affords automatic tipping over of the cheese moulds, while enabling a plurality of such moulds to be tipped over with a single operation.

Within that task it is an object of the invention to provide a tipping apparatus, whose operation can be fully automated for inclusion with the mould transport cycle without adding downtime to the various cheese processing steps.

Another object of this invention is to provide an apparatus for tipping over cheese moulds which by virtue of its peculiar construction can give full assurance of being reliable and safe to use, while affording tip-over conditions which can result in no deformation of a cheese product shape and in a positive separation of the cheese product from the mould bottom.

Still another object of the invention is to provide such an apparatus which is easy to manufacture from commercially readily available elements and materials, and can be specially advantageous from an economical standpoint, also in view of the significant reduction in labour requirements that it introduces.

According to one aspect of the invention, the above task and objects as well as yet other objects, such as will become apparent hereinafter, are achieved by an apparatus for tipping over moulds for cheese and the like, characterized in that it comprises a structural frame carrying pivotally mounted thereon a tipper having at least one mould holding tray conveyor adapted for alignment to an input conveyor and output conveyor, said tipper including holding means and translating means for securely holding and moving said mould holding trays along a substantially perpendicular direction to the pivot axis of said tipper, also provided being motor means for rotatably driving said tipper and motor means for driving said at least one conveyor.

- 3 -

0124060

Further features and advantages of the invention will be more readily understood from the following description of a preferred, though not exclusive, embodiment of an apparatus for tipping over moulds for cheese and the like, to be read in conjunction with the accompanying illustrative drawings, where:

Figure 1 is a general side view showing diagramatically the apparatus of this invention;

Figure 2 is a front view of the inventive apparatus;

Figure 3 is a side view of the tipper;

Figure 4 shows the conveyor drive means;

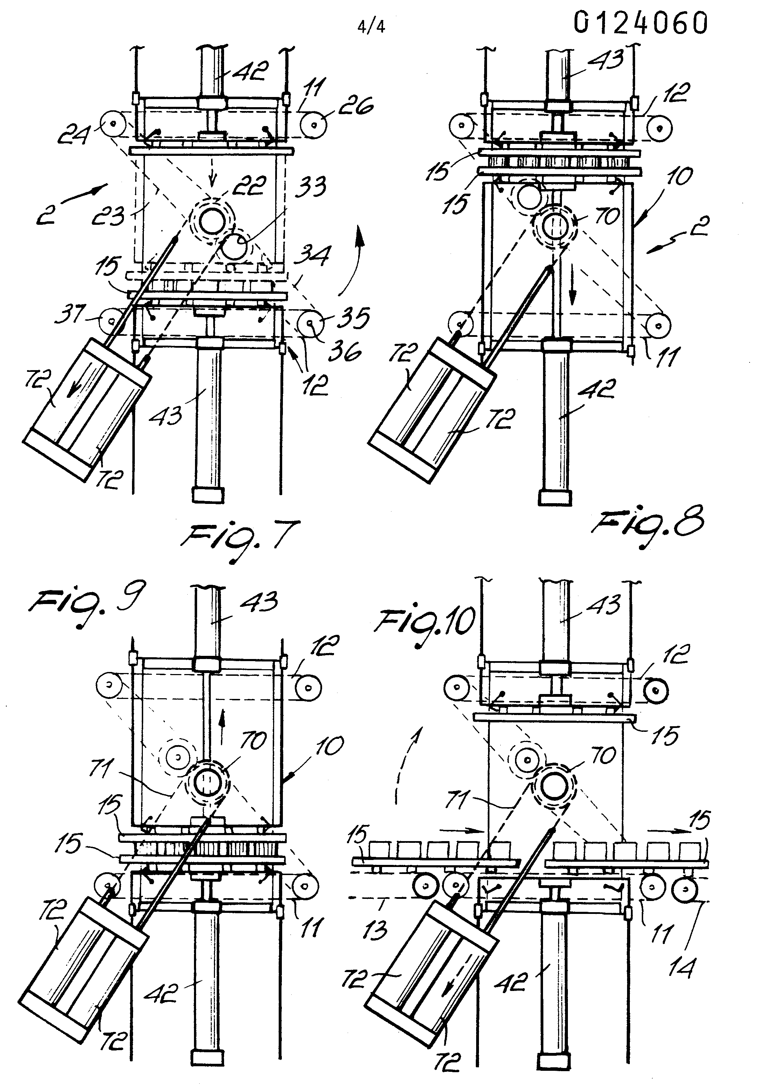

Figure 5 shows a side view of the tray holding means;

Figure 6 is a front, partly sectional, view of the tray holding means; and

Figures 7 to 10 illustrate sequentially the mould holding tray tip-over steps.

Making reference to the drawing views, an apparatus for tipping over moulds for cheese and the like, according to this invention, comprises a structural frame formed by a base or bed whence a pair of lateral sides, indicated at 1, extend upwards.

Pivotally engaged with the lateral sides 1 is a tipper, generally designated with the reference numeral 2, which includes a structural frame 10 and is rotated, along with a means to be described hereinafter, about a horizontal axis corresponding to the support axis of the tipper on the lateral sides 1.

On the frame 10, there are provided a first tray conveyor 11 and second tray conveyor 12, which

- 4 -

0124060

extend symmetrically with respect to the rotation axis of said framework.

The conveyors 11 and 12 may be alternatively aligned to an input conveyor 13 and output conveyor 14 which are respectively operative to deliver onto the conveyor, 11 or 12, a mould holding tray to be tipped over and move the tipped over tray away from the tipper.

The conveyors 11,12,13 and 14 advantageously comprise chain pairs driving the mould holding trays, indicated at 15, which trays would have crosswise ridges 16 depending therefrom for engagement with the chains.

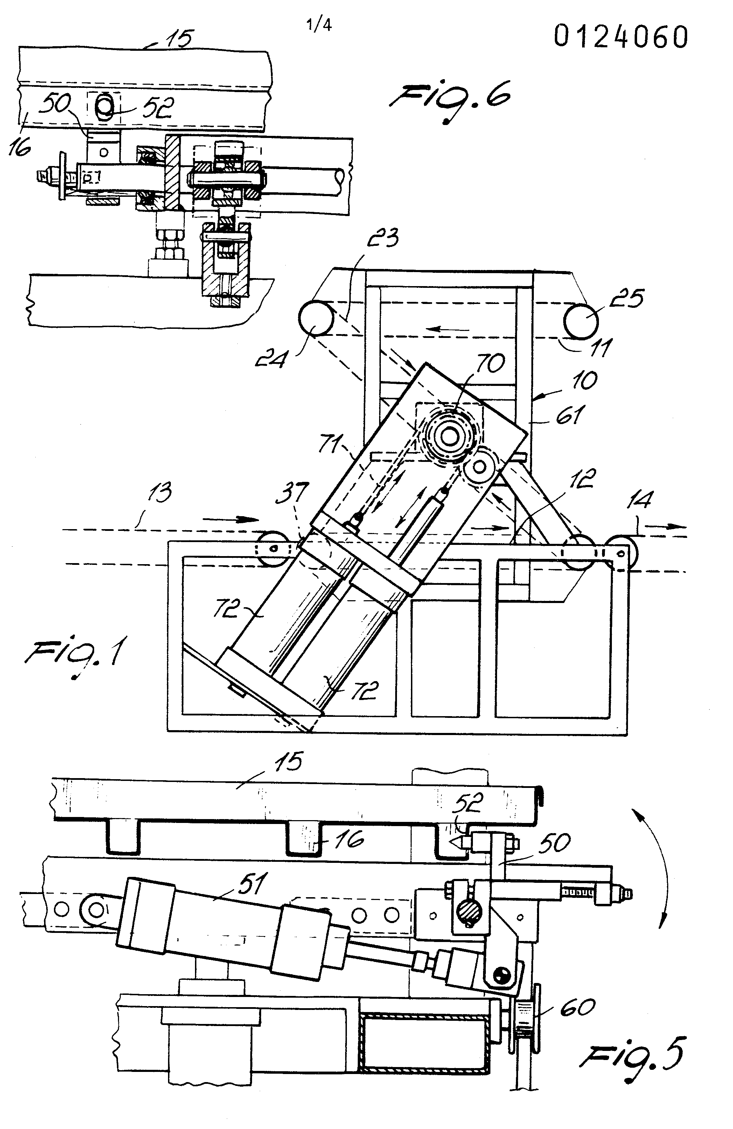

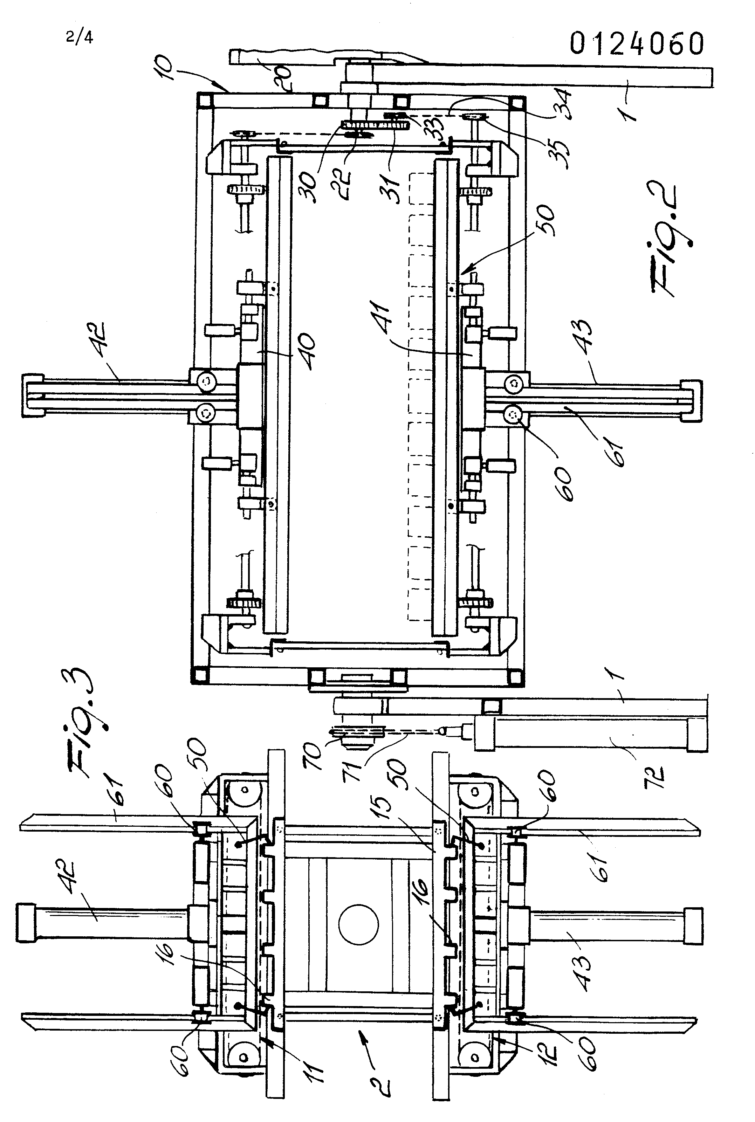

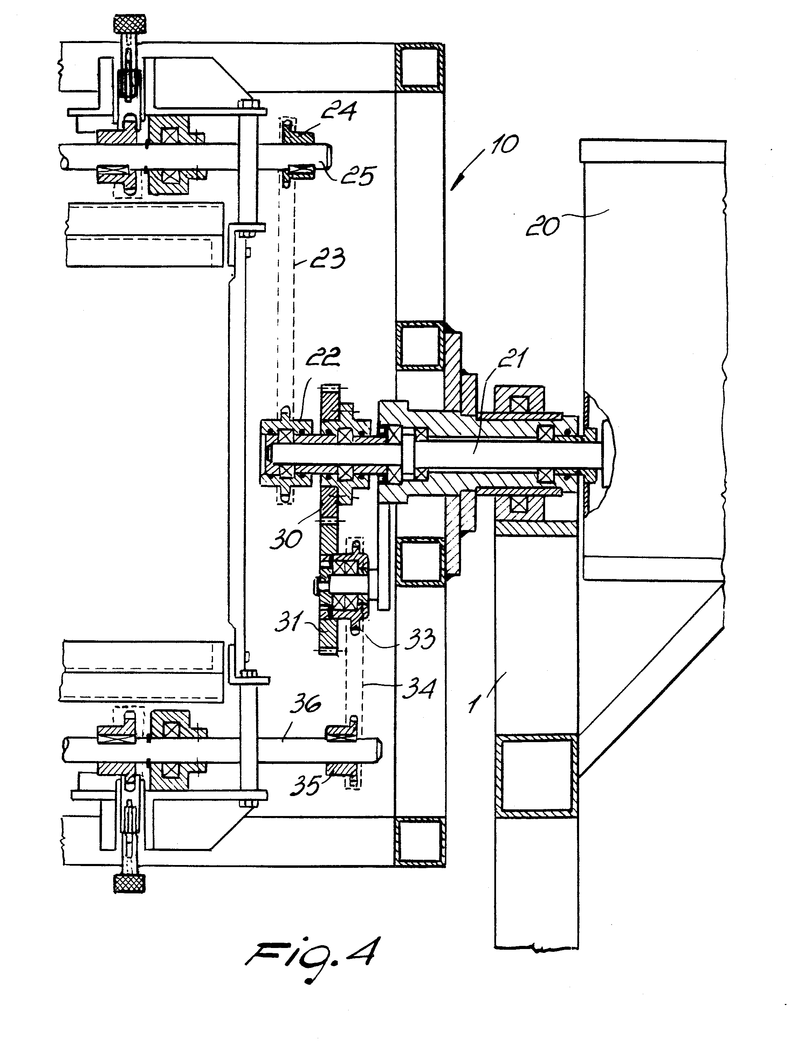

The first conveyor 11 and second conveyor 12 derive their motion from a gear motor generally indicated at 20 (Figure 4) and being mounted on the stationary structure formed by the lateral sides 1 coaxially with the pivot axis of the tipper 2. An output shaft 21 projects from the gear motor 20 which has a first unidirectional sprocket wheel 22 rotatively driving, through a first drive chain 23, a first pinion sprocket 24 keyed to a first driveshaft 25 for the first conveyor. Trained around the first driveshaft 25 is the chain of the first conveyor, which in turn, is trained around a first deflector pinion sprocket 26, also carried on the tipper.

Connected to the shaft 21 is a second unidirectional gear wheel 30 meshing with a gear 31 which has a second sprocket wheel 33 keyed thereto, wherearound a second drive chain 34 is trained which is also trained around a second pinion sprocket 35 keyed to a
second shaft 36 for driving the second conveyor, in
turn trained around a second deflector pinion
sprocket 37.

The provision of a first and second unidirectional sprocket wheels is directed, as explained hereinafter, to prevent the conveyor, 11 or 12, which
carries a tray,from being driven during rotation of
the tipper 2.

On the framework 10 of the tipper 2, there is
further provided a means for holding the mould holding
trays 15 (Figure 2), which means comprises a first
frame 40 and second frame 41 which may be positioned
symmetrically with respect to the pivot axis of the
tipper 2, said frames being driven linearly by a
first piston 42 and second piston 43.

On the frames 40 and 41, which are operative to
translate the trays 15 along a perpendicular direction
to the tipper pivot axis, there is provided a tray
holding means comprising, as shown best in Figures
5 and 6, jaw elements 50 pivotally connected to the
respective frames 40 or 41 and driven by a small
air cylinder 51 so as to cause the jaws to nest themselves into notches or seats 52 formed in the ribs
16 of the trays.

Also provided are small guiding wheels 60 which
engage with uprights 61 in the framework to slidably
hold the frames 40 and 41 guided.

In order to effect the pivotal movement of the tipper 2, keyed coaxially with the pivotal axis of the tipper is a cogged pulley 70, wherearound a drive chain 71 is trained which is connected with its ends to the piston rods of a cylinder pair 72 arranged side-by-side and being operable alternately so as to generate a reciprocating motion for the chain, and hence rotation in one direction of the tipper, followed by rotation in the opposite direction to return the tipper to a horizontal position.

The alternated rotation is provided in order to simplify the hydraulic and pneumatic connections effective to actuate the devices provided on the tipper. The provision of a pair of cylinders 72 affords, moreover, great accuracy in stopping the tipper, in order to ensure its correct positioning.

The operation of the tipper just described is quite simple. In fact, as shown in Figure 7, the tray 15 carrying moulds to be tipped over, is delivered, through the input conveyor 13, onto the second conveyor 12 which is aligned to the input conveyor 13.

Once the tray has been positioned on the second conveyor 12, the tray holding means is actuated to insert, by means of the small cylinder 51, the jaws 50 and accordingly securely lock the tray by their insertion into the seats 52.

At the same time, the holding means provided at the other conveyor, i.e. the conveyor 11, will hold back a similar tray 15 placed upside down.

After a tray 15 holding moulds has been locked in position, the first piston 42 is operated to move downwards until the tray 15 carried thereon is located above a tray and related moulds carried, in this particular instance, on the second conveyor 12.

Upon the trays being brought into mating relationship, the tipper is rotated to overturn the trays held therein (Figure 8). The tip-over operation is effected by operating the cylinders 72, which cause the tipper to rotate through 180° about its pivot axis; during this pivotal movement, the conveyor carrying the trays would not be moved, despite its relative rotation about its respective drive wheels 22 or 30, since said wheels are unidirectional ones and cannot transmit the motion during the tipping step, which would otherwise result in the conveyor rubbing against the trays and causing serious damage.

On completion of the tipping movement, as shown in Figure 8, the presently overturned trays will be located at their uppermost position; they are then brought down, by actuation of the pistons 42 and 43, expediently at some downward speed to ensure positive separation of the cheese product from the bottom of the overturned moulds.

Thereafter, the trays are deposited on the first conveyor 11, which is now aligned to both the input and output conveyors, 13 and 14.

After the so overturned moulds have been positioned, the second piston 43 is actuated to raise back (Figure 10) that tray 15 which was previously carrying moulds and will be used, during subsequent steps, as a cover element for the other trays.

On raising the tray used for a cover, the gear motor 20 is operated to drive the conveyor 11 and deliver the tray to the output conveyor 14.

Simultaneously therewith, a fresh tray 15 with moulds to be tipped over is deposited onto the first conveyor 11, and the foregoing operations gone through again with the difference that the tipper would be pivoted through 180° in the opposite direction to the former pivotal movement, thereby it is returned to its original position.

It may be appreciated from the foregoing description that the invention achieves its objects, and in particular that the apparatus of this invention enables the moulds to be first tipped over and then translated selectively at a slow or high rate so as to produce a shock effective to separate the cheese product from the mould bottoms.

Furthermore, since the tipper is rotated at a significant speed, a centrifuging effect is achieved which holds the cheese product close against the mould bottom, until,on completion of the tipping movement, it comes off the bottom without alterations of its shape.

Of considerable import is that the cheese moulds are tipped over in an automatic fashion without requiring any machine manipulations, the machine being adapted in practice to ,at each tipping operation, sandwich the moulds between two trays, and then remove, on completion of the tipping step, the uppermost tray to position it over a fresh tray carrying moulds to be tipped over, the latter tray becoming then the cover element for yet another tray, and so forth.

The invention as herein described is susceptible to many modifications and changes without departing from the true scope of the instant inventive idea.

All of the details thereof, moreover, may be replaced with other, technically equivalent elements, and in practicing the invention, the dimensions and shapes may be any selected ones contingent on individual applicational requirements.

CLAIMS

1. An apparatus for tipping over moulds for cheese and the like, characterised in that it comprises a structural frame (1) carrying pivotally mounted thereon a tipper (2) having at least one mould holding tray (15) conveyor (11,12) adapted for alignment to an input conveyor (13) and output conveyor (14), said tipper (2) including holding means (50,51,52) and translating means (40,41,42,43) for securely holding and moving said mould holding trays (15) along a substantially perpendicular direction to the pivot axis of said tipper (2), also provided being motor means (70,71,72) for rotatably driving said tipper and motor means (20) for driving said at least one conveyor (11,12).

2. An apparatus according to Claim 1, characterised in that it comprises a first mould holding tray (15) conveyor (11) and a second mould holding tray (15) conveyor (12) arranged symmetrically with respect to the pivot axis of said tipper (2).

3. An apparatus according to the preceding claims, characterised in that said first (11) and second (12) conveyors comprise chains adapted to engage with ridges (16) formed across the bottoms of said trays (15), said first (11) and second (12) conveyors being driven by a motor means including a gear motor (20) supported on said structural frame (1) coaxially with the pivot axis of said tipper (2), the output shaft (21) of said gear motor (20) having a first unidirectional sprocket wheel (22) for driving said first conveyor (11) and a second unidirectional gear wheel (30) for driving said second conveyor (12).

4. An apparatus according to one or more of the preceding claims, characterised in that said unidirectional drive wheels (22,30) are adapted to prevent actuation of that of said first (11) and second (12) conveyors which is carrying a mould holding tray (15) being tipped over.

5. An apparatus according to one or more of the preceding claims, characterised in that said translating means for said mould holding trays (15) comprises first (40) and second (41) frames respectively connected to first (42) and second (43) pistons supported on the framework (10) of said tipper (2).

6. An apparatus according to one or more of the preceding claims, characterised in that said first (40) and second (41) frames are guided slidably relatively to uprights (61) of said tipper (2).

7. An apparatus according to one or more of the preceding claims, characterised in that said holding means for said mould holding trays (15) comprises jaw elements (50) pivotally connected to said first (40) and second (41) frames and being driven by small cylinders (51), said jaw elements (50) being adapted to engage in seats (52) defined in the bottom ridges (16) of said mould holding trays (15).

8. An apparatus according to one or more of the preceding claims, characterised in that said motor means for rotating said tipper comprises a sprocket or cogged wheel (70) connected to said tipper (2) coaxially with the pivot axis thereof, said sprocket wheel (70) being engaged by a drive chain (71) connected with its ends to a pair of cylinders (72) which may be operated selectively to produce a reciprocating movement of said chain, and hence pivotal movement of said tipper (2) first in one direction and then in the opposite direction.

9. An apparatus according to one or more of the preceding claims, characterised in that said translating means for said mould holding trays, including said frames (40,41) and said pistons (42,43), is operative to cause tipped mould holding trays (15) to move in a downward direction.

10. An apparatus for tipping over moulds for cheese and the like, according to the preceding claims and substantially as herein described and illustrated.

0124060

*Fig.6*

15

50   52

16

51

23

24   25

11

10

61

70

71

13   37   12   14

72

72

*Fig.1*

15

52

16

51

50

60

*Fig.5*

0124060

Fig.2

Fig.3

Fig.4

0124060

Fig.7

Fig.8

Fig.9

Fig.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 074 683 (A. LEGUEUX)  * Page 1, line 32 - page 6, line 12; figures 1-9 * | 1-3,5 6,8,9 | A 01 J 25/16 B 65 G 47/24 |
| Y | FR-A-2 484 380 (R. BADET)  * Page 3, lines 19-29; figures 1-6 * | 1-3,5 6,8,9 | |
| A | CH-A- 496 392 (MKT-TEHTAAT OY) | | |
| A | FR-A-2 173 872 (CHANDON HANDELSGESELLSCHAFT mbH) | | |

TECHNICAL FIELDS SEARCHED (Int. Cl. ³)

A 01 J
B 65 G

The present search report has been drawn up for all claims

| Place of search | Date of completion of the search | Examiner |
|---|---|---|
| THE HAGUE | 03-07-1984 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82